# EUROPEAN PATENT APPLICATION

(11) **EP 1 500 682 A1**
(43) Date of publication of application: **26.01.2005**
(21) Application number: 03727988.2
(22) Date of filing: 25.04.2003
(51) Int. Cl.: C08L 51/08, C08L 69/00

(54) **POLYORGANOSILOXANE-CONTAINING GRAFT COPOLYMER COMPOSITION**

(30) Priority: 30.04.2002 JP 2002128969
(71) Applicant: KANEKA CORPORATION, Osaka-shi, Osaka 530-8288 (JP)
(72) Inventor: SAEGUSA, K., Osaka-Factory, KANEKA CORPORATION, Settsu-shi, Osaka 566-0072 (JP); HASHIMOTO, T., Osaka-Factory, KANEKA CORPORATION, Settsu-shi, Osaka 566-0072 (JP); TSUNEISHI, H., Osaka-Factory, KANEKA CORPORATION, Settsu-shi, Osaka 566-0072 (JP); MIYATAKE, N., KANEKA CORPORATION Takasago Plant, Takasago-shi, Hyogo 676-8688 (JP); TAKAKI, A., Osaka-Factory, KANEKA CORPORATION, Settsu-shi, Osaka 566-0072 (JP)
(74) Representative: VOSSIUS & PARTNER
(86) International application number: PCT/JP2003/005324
(87) International publication number: WO 2003/093365

(57) **Abstract**

The present invention provides a polyorganosiloxane-containing graft copolymer composition, which is a useful flame-retardant additive for a thermoplastic resin, comprising polyorganosiloxane-containing graft copolymer (A) prepared by polymerizing 5 to 60 parts by weight of vinyl monomer (a-2) in the presence of 40 to 95 parts by weight of polyorganosiloxane particles (a-1) (the sum of (a-1) and (a-2) is 100 parts by weight); and an antioxidant (B).

## Description

### Technical Field

The present invention relates to a polyorganosiloxane-containing graft copolymer composition, a flame retardant composed of the polyorganosiloxane-containing graft copolymer composition, and a flame-retardant resin composition containing the polyorganosiloxane-containing graft copolymer composition.

### Background Art

Polycarbonate resins have excellent impact resistance, high heat resistance, outstanding electric characteristics, and the like, and have thus been used in electrical and electronic components, office automation (OA) equipment, household items, and building materials. The polycarbonate resins have high flame retardancy compared with polystyrene resins. Higher flame retardancy has been required for some fields, mainly electrical and electronic components; and OA equipment. Accordingly, the flame retardancy of the polycarbonate resins has been improved by adding various flame retardants. For example, organohalogen compounds and organophosphorus compounds have been widely used as additives. However, most of the organohalogen compounds and organophosphorus compounds are toxic. A further disadvantage is the generation of corrosive gases when burning the organohalogen compounds. For these reasons, there have recently been growing demands for flame retardancy achieved by adding halogen- and/or phosphorus-free flame retardants.

The use of polyorganosiloxane compounds (also called "silicone") as halogen- and phosphorus-free flame retardants is proposed. For example, Japanese Unexamined Patent Application Publication No. 54-36365 discloses a silicone resin composed of polymonoorganosiloxane that is mixed with non-silicone polymer to produce a flame retardant resin.

Japanese Examined Patent Application Publication No. 3-48947 discloses a mixture of a silicone resin and an alkaline-earth metal salt that provides flame-retardancy to a thermoplastic resin.

Japanese Unexamined Patent Application Publication No. 8-113712 discloses a method for preparing a flame-retardant resin composition by dispersing a silicone resin into a thermoplastic resin, the silicone resin being produced by mixing 100 parts by weight of polyorganosiloxane with 10 to 150 parts by weight of a silica filler.

Japanese Unexamined Patent Application Publication No. 10-139964 discloses that a silicone resin, which is soluble in a solvent and has a weight average molecular weight of 10,000 to 270,000, is added to a non-silicone resin having aromatic rings to produce a flame-retardant resin composition.

However, the silicone resins disclosed in these Patent Publications have an unsatisfactory effect of imparting flame retardancy to the resin compositions. Further addition of the silicone resin to compensate for this effect impairs the impact resistance of the resulting resin composition. Hence, it is difficult to produce a flame-retardant resin composition with a balance between the flame retardancy and the impact resistance.

Japanese Unexamined Patent Application Publication No. 2000-17029 discloses that a composite-rubber flame retardant that is prepared by graft-polymerizing a vinyl monomer to a composite rubber composed of polyorganosiloxane rubber and poly(alkyl(meth)acrylate) rubber is compounded to a thermoplastic resin to prepare a flame-retardant resin composition.

Japanese Unexamined Patent Application Publication No. 2000-226420 discloses that a polyorganosiloxane flame retardant that is prepared by graft-polymerizng a vinyl monomer to composite particles composed of a vinyl polymer and polyorganosiloxane having aromatic groups is compounded to a thermoplastic resin to prepare a flame-retardant resin composition.

Japanese Unexamined Patent Application Publication No. 2000-264935 discloses that a polyorganosiloxane-containing graft copolymer that is prepared by graft-polymerizing a vinyl monomer to polyorganosiloxane particles having a diameter of 0.2 µm or less is compounded to a thermoplastic resin to prepare a flame-retardant resin composition.

All the flame-retardant resin compositions disclosed in Japanese Unexamined Patent Application Publication Nos. 2000-17029, 2000-226420, and 2000-264935 have sufficient impact resistance but unsatisfactory flame retardancy. Hence, these compositions have an imbalance between the flame retardancy and the impact resistance.

### Disclosure of Invention

It is an object of the present invention to provide a polyorganosiloxane-containing graft copolymer composition which can be used as a halogen- and phosphorus-free flame retardant and which has improved flame retardancy and impact resistance, and to provide a flame-retardant resin composition composed of the graft copolymer composition and having excellent flame retardancy and high impact resistance.

The inventors have conducted extensive studies in order to solve the above-described problems, and found that a specific polyorganosiloxane-containing graft copolymer composition has improved flame retardancy and impact resistance and can be compounded with a thermoplastic resin to prepare a flame-retardant resin composition having excellent flame retardancy and high impact resistance. These findings have led to the completion of the present invention.

That is, according to a first aspect of the present invention, a polyorganosiloxane-containing graft copolymer composition comprises a polyorganosiloxane-containing graft copolymer (A) produced by polymerizing 5 to 60 parts by weight of a vinyl monomer (a-2) in the presence of 40 to 95 parts by weight of polyorganosiloxane particles (a-1) (the sum of (a-1) and (a-2) is 100 parts by weight); and an antioxidant (B).

According to a second aspect of the present invention, in the polyorganosiloxane-containing graft copolymer composition according to the first aspect of the present invention, the polyorganosiloxane particles (a-1) have a volume average particle size of 0.008 to 0.6 µm.

According to a third aspect of the present invention, in the polyorganosiloxane-containing graft copolymer composition according to the first or second aspect of the present invention, a polymer prepared by polymerizing the vinyl monomer (a-2) alone has a solubility parameter of 9.15 to 10.15 (cal/cm³)^{1/2}.

According to a fourth aspect of the present invention, in the polyorganosiloxane-containing graft copolymer composition according to any one of the first through third aspects of the present invention, the polyorganosiloxane particles (a-1) are in the form of latex.

According to a fifth aspect of the present invention, in the polyorganosiloxane-containing graft copolymer composition according to any one of the first through fourth aspects of the present invention, the vinyl monomer (a-2) is at least one selected from the group consisting of an aromatic vinyl monomer, an vinyl cyanide monomer, a (meth)acrylate monomer, and a carboxyl-group-containing vinyl monomer.

According to a sixth aspect of the present invention, in the polyorganosiloxane-containing graft copolymer composition according to any one of the first through fifth aspects of the present invention, the antioxidant (B) is a phosphorus-based antioxidant or a mixture of at least two antioxidant components.

According to a seventh aspect of the present invention, in the polyorganosiloxane-containing graft copolymer composition according to any one of the first through fifth aspects of the present invention, the antioxidant (B) is a mixture of at least two antioxidant components.

According to an eighth aspect of the present invention, in the polyorganosiloxane-containing graft copolymer composition according to the seventh aspect of the present invention, the antioxidant (B) contains at least one compound having a structure represented by the following chemical formula (1) in molecule:

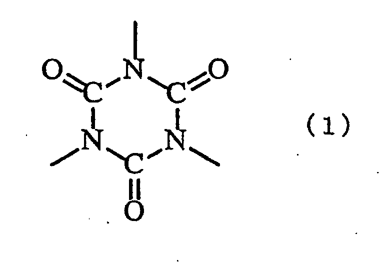

According to a ninth aspect of the present invention, in the polyorganosiloxane-containing graft copolymer composition according to the eighth aspect of the present invention, the antioxidant (B) further contains a phenolic antioxidant.

According to a tenth aspect of the present invention, in the polyorganosiloxane-containing graft copolymer composition according to the eighth aspect of the present invention, the antioxidant (B) further contains a sulfur-containing antioxidant.

According to an eleventh aspect of the present invention, in the polyorganosiloxane-containing graft copolymer composition according to the first aspect of the present invention, the antioxidant (B) is such an antioxidant that, when 0.5 parts by weight of the antioxidant is kneaded with 100 parts by weight of a polymer, which is prepared by polymerizing only the vinyl monomer (a-2) (excluding a multifunctional monomer) of the polyorganosiloxane-containing graft copolymer (A), at 230°C for 3 minutes to prepare a resin composition, this resin composition exhibits a decomposition temperature at least 5°C higher than the decomposition temperature of the polymer alone, the decomposition temperatures being determined at a heating rate of 10°C/min by differential thermal analysis.

According to a twelfth aspect of the present invention, a flame retardant is composed of the polyorganosiloxane-containing graft copolymer composition according to any one of the first through eleventh aspects of the present invention.

According to a thirteenth aspect of the present invention, a flame-retardant resin composition is prepared by mixing 100 parts by weight of thermoplastic resin with 0.1 to 30 parts by weight of the flame retardant according to the twelfth aspect of the present invention.

The present invention will be described in detail below.

### Detailed Disclosure of the Invention

A polyorganosiloxane-containing graft copolymer composition of the present invention comprises a polyorganosiloxane-containing graft copolymer (A) produced by polymerizing 5 to 60 parts by weight of a vinyl monomer (a-2) in the presence of 40 to 95 parts by weight of polyorganosiloxane particles (a-1) (the sum of (a-1) and (a-2) is 100 parts by weight); and an antioxidant (B).

The polyorganosiloxane particles (a-1) preferably have a volume average particle size of at least 0.008 µm, more preferably at least 0.01 µm, and most preferably at least 0.1 µm and up to 0.6 µm, more preferably up to 0.38 µm, and most preferably up to 0.25 µm. The volume average particle size is determined by a light scattering method or electron microscopic observation. It tends to be difficult to produce polyorganosiloxane particles having a volume average particle size of less than 0.008 µm. When the polyorganosiloxane particles have a volume average particle size of more than 0.6 µm, it tends to deteriorate flame retardancy.

The "polyorganosiloxane particles (a-1)" according to the present invention include not only particles composed of polyorganosiloxane alone, but also particles composed of modified polyorganosiloxane containing up to 5 percent by weight of other (co)polymer(s). That is, the polyorganosiloxane particles may contain, for example, up to 5 percent by weight of poly(butyl acrylate) and/or butyl acrylate-styrene copolymer in the polyorganosiloxane particles.

Examples of the polyorganosiloxane particles (a-1) include polydimethylsiloxane particles, polymethylphenylsiloxane particles, and dimethylsiloxane-diphenylsiloxane copolymer particles. The polyorganosiloxane particles (a-1) may be'used alone or in combination.

The polyorganosiloxane particles (a-1) can be prepared by polymerizing, for example, (1) an organosiloxane; (2) a bifunctional silane compound; (3) an organosiloxane and a bifunctional silane compound; (4) an organosiloxane and a silane compound having a polymerizable vinyl group; (5) a bifunctional silane compound and a silane compound having a polymerizable vinyl group; or (6) an organosiloxane, a bifunctional silane compound, and a silane compound having a polymerizable vinyl group. A silane compound having a functionality of three or more may be further added.

The polyorganosiloxane particles (a-1) are preferably prepared by emulsion polymerization of the components such as the organosiloxane, the bifunctional silane compound, the silane compound having the polymerizable vinyl group, and the optional silane compound having a functionality of three or more.

The emulsion polymerization can be performed by emulsifying and dispersing the components used to prepare polyorganosiloxane into water with an emulsifier by mechanical shearing and acidified. When the emulsified droplets having a diameter of several micrometers or more are produced during mechanical shearing, the volume average particle size of the polyorganosiloxane particles (a-1) can be controlled within the range of 0.02 to 0.6 µm depending on the amount of the emulsifier used.

A polyorganosiloxane-containing graft copolymer (A) is prepared by graft polymerization of a vinyl monomer (a-2) in the presence of the resulting polyorganosiloxane particles (a-1). In the polymerization of the vinyl monomer (a-2) in the presence of the polyorganosiloxane particles (a-1), part of the branch component of the graft copolymer (wherein branch component means polymers generated from the vinyl monomer (a-2)) is not grafted to the trunk component (polyorganosiloxane particles (a-1)) of the graft copolymer and is present as a free polymer. Hence, a mixture of the graft copolymer and the free polymer is produced during the graft copolymerization. In the present invention, the "graft copolymer" includes both the graft copolymer and the free polymer.

The polyorganosiloxane-containing graft copolymer (A) is prepared by polymerizing at least 5, preferably at least 15, and more preferably at least 20 and up to 60, preferably up to 40, and more preferably up to 35 parts by weight of a vinyl monomer (a-2) in the presence of at least 40, preferably at least 60, and more preferably at least 65 and up to 95, preferably up to 85, and more preferably up to 80 parts by weight of polyorganosiloxane particles (a-1), providing that the sum of (a-1) and (a-2) is 100 parts by weight. When the amount of polyorganosiloxane particles (a-1) is out of the range, it tends to deteriorate flame retardancy. When the amount of vinyl monomer (a-2) is out of the range, it also tends to impair flame retardancy.

The vinyl monomer (a-2) is used for preparing the polyorganosiloxane-containing graft copolymer (A) and is also used for ensuring the compatibility between the graft copolymer and a thermoplastic resin in order to uniformly disperse the graft copolymer in the thermoplastic resin when the graft copolymer is compounded with the thermoplastic resin to improve flame retardancy and impact resistance. A polymer prepared by polymerizing the vinyl monomer (a-2) alone preferably has a solubility parameter of at least 9.15, more preferably at least 9.17, and most preferably at least 9.20 and up to 10.15, more preferably up to 10.10, and most preferably up to 10.05 (cal/cm³)^{1/2}. When the solubility parameter is out of the range, it tends to impair flame retardancy.

Examples of the vinyl monomers (a-2) include, for example, aromatic vinyl monomers such as styrene, α-methylstyrene, *p*-methylstyrene, and *p*-butylstyrene; vinylcyanide monomers such as acrylonitrile and methacrylonitrile; (meth)acrylic acid ester monomers such as methyl acrylate, ethyl acrylate, propyl acrylate, butyl acrylate, 2-ethylhexyl acrylate, glycidyl acrylate, hydroxyethyl acrylate, hydroxybutyl acrylate, methyl methacrylate, ethyl methacrylate, butyl methacrylate, lauryl methacrylate, glycidyl methacrylate, and hydroxyethyl methacrylate; and carboxyl-group-containing vinyl monomers such as itaconic acid, (meth)acrylic acid, fumaric acid, and maleic acid. The vinyl monomer (a-2) may include a multifunctional monomer having at least two polymerizable unsaturated bonds per molecule, if necessary. Examples of the multifunctional monomers include allyl methacrylate, triallyl cyanurate, triallyl isocyanurate, diallyl phthalate, ethylene glycol dimethacrylate, 1,3-butylene glycol dimethacrylate, and divinylbenzene. The vinyl monomer (a-2) may be used alone or in combination.

A normal seeded emulsion polymerization can be applied to the graft polymerization and can be achieved by radical-polymerizing the vinyl monomer (a-2) in latex of the polyorganosiloxane particles (a-1). The vinyl monomer (a-2) may be polymerized in a single step or through at least two steps. When the polymerization is performed through at least two steps, the compositions at these steps are not' limited and may be the same or different.

In view of the compatibility to a thermoplastic resin, the vinyl monomer (a-2) is selected such that the solubility parameter of the polymer prepared by polymerizing the vinyl monomer (a-2) is in the above-described range.

The radical polymerization is not limited and can employ a method for proceeding a reaction by thermal decomposition of a radical-polymerization initiator and a method for using a reaction with a reducing agent in a redox system.

A graft copolymer prepared by emulsion polymerization may be used in the form of latex or may be isolated from the latex and then used. A method for isolating the polymer includes, for example, the following normal process: The latex is coagulated by adding a metal salt, for example, calcium chloride, magnesium chloride, or magnesium sulfate, and then the coagulant is separated, washed, dehydrated, and dried. Furthermore, a spray drying process can also be used.

In molding a mixture produced by compounding the polyorganosiloxane-containing graft copolymer (A) to a thermoplastic resin, the antioxidant (B) used in the present invention can suppress thermal degradation of the polymer constituting the grafted component of the polyorganosiloxane-containing graft copolymer and can thus suppress a deterioration in flame retardancy of a final molded product.

The antioxidant (B) of the present invention is not limited and preferably includes a phosphorus-based antioxidant and/or a mixture of at least two antioxidants in view of flame retardancy. The phosphorus-based antioxidants may be used alone or in combination. When at least two antioxidants are used, a phosphorus-based antioxidant may be used as at least one component among the antioxidants or need not.

In the present invention, for example, a phenolic antioxidant, a phosphorus-based antioxidant, and a sulfur-containing antioxidant can be used as the antioxidants.

Examples of the phenolic antioxidants include 2,6-di-*tert*-butyl-*p*-cresol, 4,4'-butylidenebis(6-*tert*-butyl-3-methylphenol), 2,2'-methylenebis(4-methyl-6-*tert*-butylphenol), 2,2'-methylenebis(4-ethyl-6-*tert*-butylphenol), 2,6-di-*tert*-butyl-4-ethylphenol, 1,1,3-tris(2-methyl-4-hydroxy-5-*tert*-butylphenyl)butane, *n*-octadecyl-3-(3,5-di-*tert*-butyl-4-hydroxyphenyl)propionate, tetrakis[methylene-3-(3,5-di-*tert*-butyl-4-hydroxyphenyl)propionate]methane, triethylene glycol bis[3-(3-*tert*-butyl-4-hydroxy-5-methylphenyl)propionate], tris(3,5-di-*tert*-butyl-4-hydroxybenzyl) isocyanurate, and butylidene-1,1-bis(2-methyl-4-hydroxy-5-tert-butylphenyl).

Examples of the phosphorus-based antioxidants include cyclic neopentanetetraylbis(2,6-di-*tert*-butyl-4-methylphenyl)phosphite, tris(2,4-di-*tert*-butylphenyl)phosphite, bis(2,6-di-*tert*-butyl-4-methylphenyl)pentaerythritol phosphite, and 2,2-methylenebis(4,6-di-*tert*-butylphenyl)octylphosphite.

Examples of the sulfur-containing antioxidants include dilauryl thiodipropionate, distearyl thiodipropionate, dimyristyl thiodipropionate, and ditridecyl thiodipropionate.

An example of an antioxidant having both properties of the phenolic antioxidant and the sulfur-containing antioxidant includes, for example, 4,4'-thiobis(6-*tert*-butyl-3-methylphenol).

The use of a phosphorus-based antioxidant alone or in combination can achieve excellent flame retardancy. When an antioxidant other than the phosphorus-based antioxidant is used, the use of the antioxidant alone leads to an undesirable tendency to impair flame retardancy, while the use of the antioxidant in combination can achieve excellent flame retardancy.

In particular, when a compound having a structure represented by the following chemical formula (1) in molecule is used as one of the antioxidants, further excellent flame retardancy can be achieved. Furthermore, when this antioxidant is used together with the phenolic antioxidant and/or the sulfur-containing antioxidant, further outstanding flame retardancy can be exhibited.

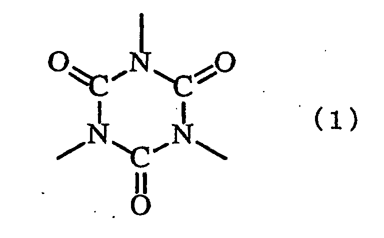

Examples of compounds having such structure in molecule include, for example, tris(3,5-di-tert-butyl-4-hydroxybenzyl) isocyanurate.

It is preferable to use the antioxidant that, when 0.5 part by weight of the antioxidant (B) (when the antioxidant is a mixture of at least two antioxidant components, the sum of the antioxidant components is 0.5 part by weight. At least 10 percent, preferably at least 20 percent by weight of antioxidant component relative to the total amount of the antioxidant is counted as one component) is kneaded with 100 parts by weight of a polymer, which is prepared by polymerizing only the vinyl monomer (a-2) (excluding a multifunctional monomer) of the polyorganosiloxane-containing graft copolymer (A), at 230°C for 3 minutes to prepare a resin composition, this resin composition exhibits a decomposition temperature at least 5°C, preferably at least 7°C, more preferably at least 9°C higher than the decomposition temperature of the polymer alone, the decomposition temperatures being determined at a heating rate of 10°C/min by differential thermal analysis. The use of an antioxidant in the case of a decomposition temperature of at least 5°C higher than that of the polymer alone can achieve further excellent flame retardancy. When the vinyl monomer (a-2) for the preparation of the polyorganosiloxane-containing graft copolymer (A) is polymerized through at least two steps, the antioxidant is compounded to a mixture of polymers that are prepared by polymerizing only the vinyl monomer (a-2) in each step, the mixture being in the same ratio of the polymers with the polyorganosiloxane-containing graft copolymer (A).

The antioxidant (B) is used in an amount of 0.3 to 30 parts by weight in total to 100 parts by weight of the polyorganosiloxane-containing graft copolymer (A). The lower limit is preferably one, more preferably two parts by weight. The upper limit is preferably 20, more preferably 15 parts by weight. When the amount of antioxidant exceeds the upper limit, a drip occurs at combustion of a molded product to impair the flame retardancy. When the amount of antioxidant is less than the lower limit, the flame retardancy is unsatisfactory.

The antioxidant and the polyorganosiloxane-containing graft copolymer can be mixed by the following various methods: A method for mixing a powdered or liquid antioxidant into a powdered polyorganosiloxane-containing graft copolymer; in a step of manufacturing a powdered polyorganosiloxane-containing graft copolymer, a method for mixing a powdered, liquid, or emulsified antioxidant into a polyorganosiloxane-containing graft copolymer in the form of a slurry; a method for mixing a powdered, liquid, or emulsified antioxidant into a polyorganosiloxane-containing graft copolymer in the form of latex; and a method for mixing a powdered, liquid, or emulsified antioxidant into polyorganosiloxane particles (a-1) in the form of latex or into a reaction system during polymerizaion to prepare the polyorganosiloxane-containing graft copolymer in the form of latex.

The resulting polyorganosiloxane-containing graft copolymer composition is compounded to various thermoplastic resins to prepare flame-retardant resin compositions having excellent flame retardancy and high impact resistance.

Various thermoplastic resins can be used. A polycarbonate resin having a polycarbonate content of at least 50%, preferably at least 70% is preferably used in view of excellent flame retardancy. Examples of the polycarbonate resins include, for example, polycarbonate (in particular, aromatic polycarbonate); polycarbonate/polyester blends such as a polycarbonate/poly(ethylene terephthalate) blend, and a polycarbonate/poly(butylene terephthalate) blend; a polycarbonate/(acrylonitrile-styrene copolymer) blend; a polycarbonate/(butadiene-styrene copolymer) (high impact polystyrene (HIPS) resin) blend; a polycarbonate/(acrylonitrile-butadiene rubber-styrene copolymer) (ABS resin) blend; a polycarbonate/(acrylonitrile-butadiene rubber-α-methylstyrene copolymer) blend; a polycarbonate/(styrene-butadiene rubber-acrylonitrile-*N*-phenylmaleimide copolymer) blend; and a polycarbonate/(acrylonitrile-acrylic rubber-styrene copolymer) (AAS resin) blend, which are preferable in view of economy and a satisfactory balance between flame retardancy and impact resistance. The blends may be used in combination.

The amount added of the flame retardant composed of the polyorganosiloxane-containing graft copolymer composition is 0.1 to 30 parts by weight to 100 parts by weight of the thermoplastic resin in view of economy and a satisfactory balance between flame retardancy and impact resistance. The lower limit is preferably 0.5, more preferably 1 parts by weight. The upper limit is preferably 15, more preferably 10, most preferably 5 parts by weight.

A powdered flame retardant composed of the polyorganosiloxane-containing graft copolymer composition and a thermoplastic resin can be mixed using, for example, a Henschel mixer or a ribbon blender and then kneaded using, for example, a roll mill, an extruder, or a kneader.

At this time, typical additives, for example, an antioxidant, an anti-dripping agent, a polymer processing aid, a flame retardant, a flame-retardant aid, an impact modifier, a plasticizer, a lubricant, an ultraviolet absorber, a pigment, glass fiber, fillers, and a polymer lubricant, can be compounded.

Examples of the antioxidants include the same compounds as the antioxidant (B). In this case, the antioxidant compounded can be mainly used for preventing the thermal degradation of a thermoplastic resin.

Examples of the anti-dripping agents include, for example, fluorinated polyolefin resins such as polymonofluoroethylene, polydifluoroethylene, polytrifluoroethylene, polytetrafluoroethylene, tetrafluoroethylene/hexafluoroethylene copolymer, and polyvinylidene fluoride, which are preferable because of their high anti-dripping effect.

An example of the polymer processing aid is a methacrylate (co)polymer such as methyl methacrylate-butyl acrylate copolymer.

Examples of the impact modifiers include, for example, a butadiene rubber-type impact modifier (methyl methacrylate-butadiene-styrene (MBS) resin), a butyl acrylate rubber-type impact modifier, a butyl acrylate/silicone composite= rubber-containing impact modifier, an octyl acrylate rubber-containing impact modifier, an octyl acrylate/silicone composite-rubber-containing impact modifier, a butyl acrylate/silicone co-coagulated rubber-containing impact modifier, and octyl acrylate/silicone co-coagulated rubber-containing impact modifier.

In addition, other flame retardants may also be used together. Examples of the flame retardants include silicone compounds such as aromatic-group-containing polyorganosiloxane; triazine compounds such as cyanuric acid and melamine cyanurate; boron compounds such as boron oxide and zinc borate, which are preferable as they are halogen- and phosphorus-free flame retardants. Furthermore, phosphorus compounds such as triphenyl phosphate, condensed phosphate, and stabilized red phosphorus may also be used together. In this case, the use of a polyorganosiloxane-containing graft copolymer composition of the present invention can advantageously reduce the phosphorus-based flame retardant content in a composition.

Examples of the preferable flame-retardant aids include metal salts of organic sulfonic acids and metal salts of sulfuric esters, for example, sodium salts, potassium salts, or calcium salts of methanesulfonic acid, ethanesulfonic acid, propanesulfonic acid, butanesulfonic acid, methylbutanesulfonic acid, hexanesulfonic acid, heptanesulfonic acid, octanesulfonic acid, perfluoromethanesulfonic acid, perfluoroethanesulfonic acid, perfluoropropanesulfonic acid, perfluorobutanesulfonic acid, perfluoromethylbutanesulfonic acid, perfluorohexanesulfonic acid, perfluoroheptanesulfonic acid, perfluorooctanesulfonic acid, (alkyl)aromatic sulfonic acid, and alkylsulfuric acid ester. Typical examples of the flame-retardant aids preferably include sodium ethanesulfonate, potassium perfluorobutanesulfonate, sodium dodecylbenzenesulfonate, and potassium dodecylbenzenesulfonate.

The amounts of these additives used are preferably 0.1 to 20, more preferably 0.2 to 10, most preferably 0.3 to 5 parts by weight to 100 parts by weight of a thermoplastic resin in view of a balance between efficiency and cost.

Methods for molding the resulting flame-retardant resin composition include molding processes of general thermoplastic resin compositions, for example, injection molding, extrusion, blow molding, and calendaring.

Applications of molded products obtained by molding flame-retardant resin compositions of the present invention are not limited and include, for example, various construction materials, various automotive components, and components of housing and chassis for office automation equipment such as desktop computers, notebook computers, tower computers, printers, and copiers; information equipment such as facsimiles, cellular phones, and personal handyphone systems (PHS); household electrical appliances such as televisions and videocassette recorders, which require flame retardancy.

The resulting molded products have excellent flame retardancy.

### Best Mode for Carrying Out the Invention

The present invention will now be described in detail based on examples, however, the present invention is not limited to these examples. Unless otherwise specified, the term "parts" means "parts by weight".

Measurements and tests in Examples and Comparative Examples were performed as follows:

### [POLYMERIZATION CONVERSION]

A latex was dried at 120°C for an hour with a hot-air dryer to determine the solid content. Polymerization conversion was given by the following equation: 100×(solid content)/(amount of fed monomer) (%).

### [VOLUME AVERAGE PARTICLE SIZE]

The volume average particle sizes of polyorganosiloxane particles and a graft copolymer were measured in the form of latex. The volume average particle sizes (µm) were measured by a light scattering method with a Microtrac UPA (manufactured by Leeds & Northrup instruments).

### [IMPACT RESISTANCE]

Impact resistance was evaluated with a 1/8 inch bar with a notch at a temperature of -10°C according to ASTM D256.

### [FLAME RETARDANCY]

Flame retardancy was evaluated according to a Vertical Burning test of Underwriters Laboratory 94 (UL94V test).

### [DIFFERENTIAL THERMAL ANALYSIS (DTA)]

A polymer prepared by polymerizing a vinyl monomer (excluding a multifunctional monomer) used for the preparation of a polyorganosiloxane-containing graft copolymer or a mixture of 100 parts by weight of the polymer with 0.5 parts by weight of an antioxidant (when the antioxidant was a mixture of at least two antioxidant components, the sum of antioxidant components was 0.5 parts by weight.) was kneaded at 230°C for 3 minutes with a plastmil. Then, 10 mg of the resulting mixed resin was subjected to differential thermal analysis with a TG8110 (manufactured by Rigaku Co.) under the following conditions: heating rate of 10°C/min; nitrogen flow rate of 30 ml/min; and temperature range from room temperature to 500°C.

### (REFERENCE EXAMPLE 1) Preparation of polyorganosiloxane particles (S-1).

An aqueous solution containing the following components was agitated at 10,000 rpm for 5 minutes with a Homomixer to prepare an emulsion.

| Component | content (part) |
|---|---|
| Pure water | 251 |
| Sodium dodecylbenzenesulfonate (SDBS) | 1.0 |
| Octamethylcyclotetrasiloxane (D4) | 95 |
| Mercaptopropyldimethoxymethylsilane (MPDS) | 5 |

The resulting emulsion was fed into a five-necked flask equipped with a stirrer, a reflux condenser, an inlet for introducing nitrogen gas, an inlet for introducing additional monomers, and a thermometer in a single operation. While the mixture was being stirred, one part (solid content) of 10% dodecylbenzenesulfonic acid (DBSA) aqueous solution was added. The temperature of the resulting mixture was increased to 80°C over a period of about 40 minutes, and then the reaction was performed at 80°C for 6 hours. The resulting mixture was cooled to 25°C and left for 20 hours. Then the pH of the reaction mixture was adjusted to 6.5 with sodium hydroxide to complete the polymerization. Consequently, a latex containing polyorganosiloxane particles (S-1) was prepared. Polymerization conversion and an average particle size were measured. The results are shown in table 1.

### (REFERENCE EXAMPLE 2) Preparation of polyorganosiloxane particles (S-2).

To a five-necked flask equipped with a stirrer, a reflux condenser, an inlet for introducing nitrogen gas, an inlet for introducing additional monomers, and a thermometer were fed 189 parts of pure water and 0.4 parts of sodium dodecylbenzenesulfonate (SDBS).

Next, the reaction mixture was heated to 70°C under a nitrogen purge. An aqueous solution containing one part of pure water and 0.02 parts of potassium persulfate (KPS) was added to the reaction mixture. Subsequently, a mixture containing 0.7 parts of styrene (St) and 1.3 parts of butyl methacrylate (BMA) was added to the reaction mixture in a single operation, and then the resulting reaction mixture was stirred for an hour to complete the polymerization. Consequently, a latex containing a styrene-butyl methacrylate (St-BMA) copolymer was prepared.
Polymerization conversion was 99%. The resulting latex had a solid content of 1.0% and an average particle size of 0.04 µm.

Another mixture containing the following components was agitated at 10,000 rpm for 5 minutes with a Homomixer to prepare an emulsion containing components used to prepare polyorganosiloxane.

| Component | content (part) |
|---|---|
| Pure water | 70 |
| Sodium dodecylbenzenesulfonate (SDBS) | 0.5 |
| Octamethylcyclotetrasiloxane (D4) | 95 |
| γ-methacryloyloxypropyldimethoxymethylsilane | 3 |

Subsequently, the latex containing the St-BMA copolymer was maintained at a temperature of 80°C, and then one part (solid content) of 10% dodecylbenzenesulfonic acid (DBSA) aqueous solution was added to the latex. Next, the emulsion containing the components used to prepare polyorganosiloxane was added in a single operation. The resulting latex was stirred for 6 hours, and then cooled to 25°C and left for 20 hours. After that, the pH of the latex was adjusted to 6.4 with sodium hydroxide to complete the polymerization. Consequently, a latex containing polyorganosiloxane particles (S-2) was prepared. Polymerization conversion and an average particle size were measured. The results are shown in table 1. The polyorganosiloxane particles in the latex were composed of 98% of polyorganosiloxane and 2% of St-BMA copolymer. The composition was calculated with the fed amounts and the polymerization conversion.

**Table 1**

| | Reference example 1 | Reference example 2 |
|---|---|---|
| Polyorganosiloxane particles | S-1 | S-2 |
| Polymerization conversion of polyorganosiloxane component (%) | 87 | 87 |
| Average particle size (µm) | 0.14 | 0.17 |

### (REFERENCE EXAMPLES 3 AND 4) Preparation of polyorganosiloxane-containing graft copolymer (SG-1 AND SG-2).

To a five-necked flask equipped with a stirrer, a reflux condenser, an inlet for introducing nitrogen gas, an inlet for introducing additional monomers, and a thermometer were fed 300 parts of pure water (including water in the latex containing polyorganosiloxane particles (S-1 OR S-2)), 0.2 parts of sodium formaldehyde sulfoxylate (SFS), 0.01 parts of disodium ethylenediaminetetraacetate (EDTA), 0.0025 parts of iron (II) sulfate, and 75 parts (solid content) of the latex containing the polyorganosiloxane particles (S-1 or S-2). While the resulting mixture was being stirred, the temperature of the mixture was increased to 60°C under a nitrogen flow. After the temperature reached 60°C, a mixture of a monomer (a-2-1) and a radical polymerization initiator shown in Table 2 was added in an amount shown in Table 2 in a single operation. The resulting mixture was stirred at 60°C for an hour, and then a monomer (a-2-2) shown in Table 2 was further added dropwise over a period of three hours. After finishing the dropwise addition, the resulting mixture was stirred for an hour to prepare a graft-copolymer latex.

Subsequently, the resulting latex was diluted with pure water to adjust the solid content to 15%, and then two parts (solid content) of 10% calcium chloride aqueous solution was added, thus resulting in a coagulated slurry. The resulting coagulated slurry was heated to 80°C and cooled to 50°C, followed by dehydration and drying, thus resulting in a powdered polyorganosiloxane graft copolymer (SG-1 or SG-2). Table 2 shows polymerization conversions.

In Table 2, the abbreviations "AlMA", "MMA", and "CHP" represent an allyl methacrylate monomer, a methyl methacrylate monomer, and cumene hydroperoxide (radical polymerization initiator), respectively. The term "polymer SP" means a solubility parameter of a polymer prepared by polymerizing a vinyl monomer (a-2-2).

**Table 2**

| | | Reference example 3 | Reference example 4 |
|---|---|---|---|
| Polyorganosiloxane particles (part) | S-1 | 75 | - |
| | S-2 | - | 80 |
| Vinyl monomer (a-2-1) (part) | AIMA | 3 | - |
| | CHP | 0.01 | - |
| Vinyl monomer (a-2-2)(part) | MMA | 22 | 20 |
| | CHP | 0.04 | 0.04 |
| Polymer SP ((cal/cm³)^{1/2}) | | 9.25 | 9.25 |
| Polymerization conversion | | 99% | 99% |
| Graft copolymer | | SG-1 | SG-2 |

### (REFERENCE EXAMPLES 5 AND 6) Preparation of copolymer (SG-1' and SG-2').

Polymers were prepared for differential thermal analysis (DTA) as in Reference Examples 3 and 4, except that 0.5 parts of sodium dodecylbenzenesulfonate was used in each of Reference Examples 3 and 4 instead of the polyorganosiloxane particles (S-1 and S-2), and the monomer (a-2-1) was not polymerized. The polymers were subjected to differential thermal analysis (DTA) in the presence or absence of antioxidants. Results are shown in tables 3 and 4.

### (EXAMPLES 1 TO 4 AND COMPARATIVE EXAMPLES 1 TO 4) Imparting flame retardancy to polycarbonate resin.

According to the compositions shown in Table 3, each of the polyorganosiloxane-containing graft copolymer compositions (SG-1 and SG-2) prepared in Reference Examples 3 and 4 and at least one antioxidant were mixed to produce a flame retardant composed of the polyorganosiloxane-containing graft copolymer composition of the present invention. The term "PEP36" means a phosphorus-based antioxidant (ADK STAB PEP36 (cyclic neopentanetetraylbis(2,6-di-tert-butyl-4-methylphenyl)phosphite) manufactured by ASAHI DENKA CO., LTD.); the term "AO-20" means a phenolic antioxidant having the structure represented by chemical formula (1) (ADK STAB AO-20 (tris(3,5-di-tert-butyl-4-hydroxybenzyl isocyanurate) manufactured by ASAHI DENKA CO., LTD.); the term "AO-30" means a phenolic antioxidant (ADK STAB AO-30 (1,1,3-tris(2-methyl-4-hydroxy-5-tert-butylphenyl)butane) manufactured by ASAHI DENKA CO., LTD.); the term "DLTP" means a sulfur-containing antioxidant (DLTP Yoshitomi (dilauryl thiodipropionate) manufactured by YOSHITOMI FINE CHEMICALS LTD.); and the term "PTFE" means polytetrafluoroethylene (POLYFLON FA-500 manufactured by DAIKIN INDUSTRIES, LTD.).

According to Table 3, each of the resulting flame retardants was compounded with a polycarbonate resin PC-1 (TARFLON FN-2200A manufactured by Idemitsu Petrochemical, Co., Ltd.) and an antidripping agent or compounded with PC-2 (TARFLON FN1900A manufactured by Idemitsu Petrochemical, Co., Ltd.) and the antidripping agent.

The resulting compounds were kneaded at 270°C with a twin-screw extruder (TEX44SS manufactured by The Japan Steel Works, LTD.) to produce pellets. The resulting pellets were molded with an injection molding machine (FAS100B manufactured by FANUC LTD) at a cylinder temperature of 280°C to form 1/8-inch Izod specimens and 1/16-inch specimens for evaluating flame retardancy. The produced specimens were evaluated according to the evaluation criteria described above.

Results are shown in table 3.

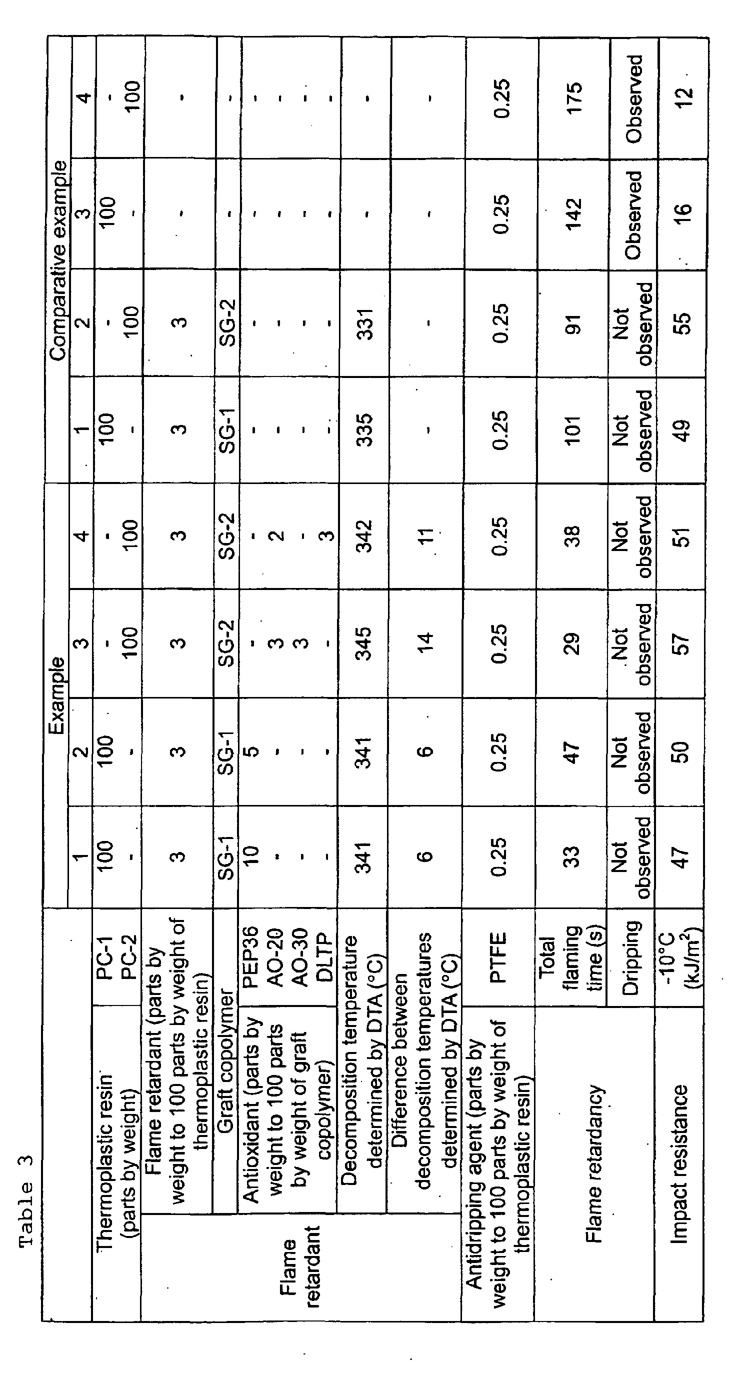

Table 3 shows that each of the graft copolymer compositions of the present invention significantly improves a balance between flame retardancy and impact resistance of the corresponding polycarbonate resin.

### (EXAMPLES 5 TO 8 AND COMPARATIVE EXAMPLES 5 TO 7) Imparting flame retardancy to polycarbonate/poly(ethylene terephthalate) mixed resin.

According to compositions shown in Table 4, each of the polyorganosiloxane-containing graft copolymer compositions (SG-1 and SG-2) prepared in Reference Examples 3 and 4 and at least one antioxidant were mixed to produce a flame retardant composed of the polyorganosiloxane-containing graft copolymer composition of the present invention.

According to Table 4, each of the resulting flame retardants was compounded with PC-1, a poly(ethylene terephthalate) (PET) resin (BELLPET: EFG-70 manufactured by Kanebo Gohsen, ltd.), and an antidripping agent.

Each of the resulting compounds was kneaded at 270°C with a twin-screw extruder (TEX44SS manufactured by The Japan Steel Works, LTD.) to produce pellets. The resulting pellets were molded with an injection molding machine (FAS100B manufactured by FANUC LTD) at a cylinder temperature of 260°C to form 1/8-inch Izod specimens and 1/12-inch specimens for evaluating flame retardancy. The produced specimens were evaluated according to the evaluation criteria.

Results are shown in table 4.

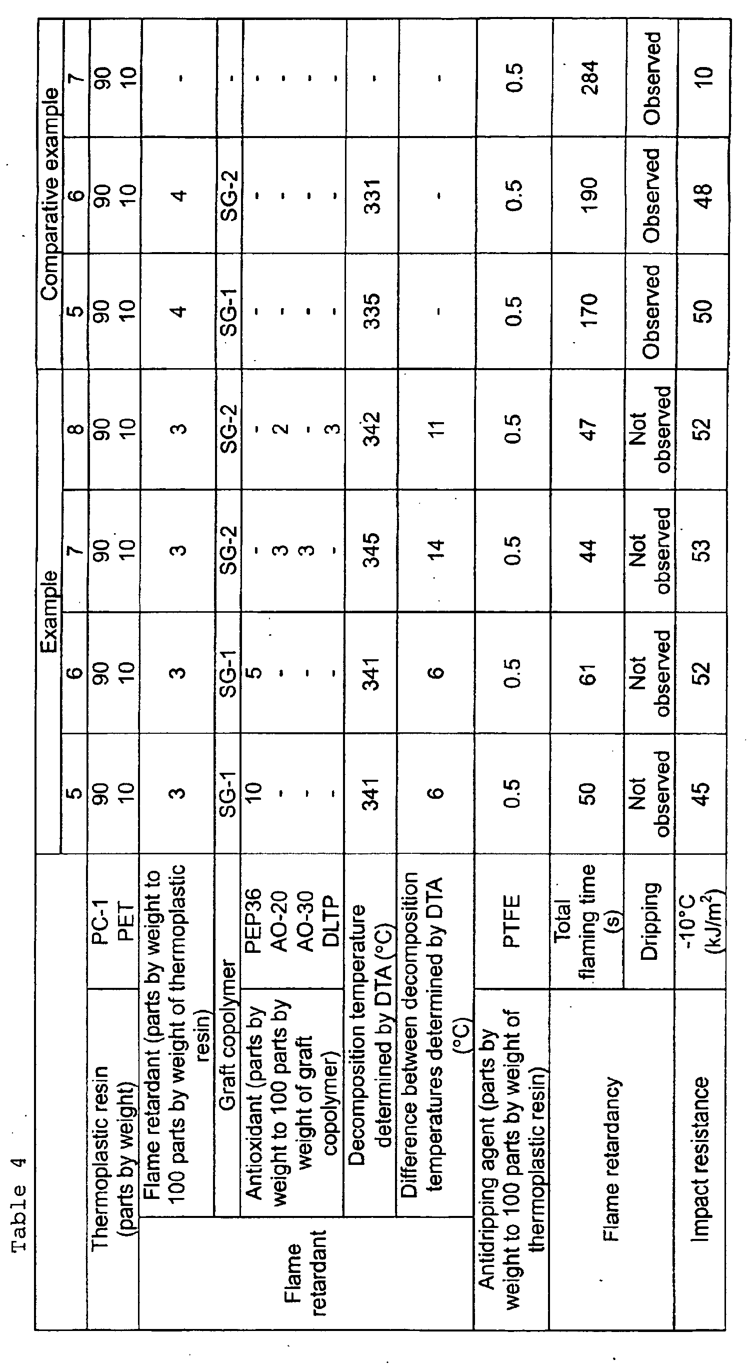

Table 4 shows that each of the graft copolymer compositions of the present invention significantly improves a balance between flame retardancy and impact resistance of the corresponding polycarbonate/poly(ethylene terephthalate) resin.

### Industrial Applicability

The present invention provides a flame retardant that can be added to a thermoplastic resin composition with an excellent balance between flame retardancy and impact resistance. Furthermore, a flame-retardant resin composition containing the flame retardant and having an excellent balance between flame retardancy and impact resistance can be prepared.

## Claims

1. A polyorganosiloxane-containing graft copolymer composition comprising:
a polyorganosiloxane-containing graft copolymer (A) prepared by polymerizing 5 to 60 parts by weight of a vinyl monomer (a-2) in the presence of 40 to 95 parts by weight of polyorganosiloxane particles (a-1) (the sum of (a-1) and (a-2) is 100 parts by weight); and an antioxidant (B).

2. The polyorganosiloxane-containing graft copolymer composition according to Claim 1, wherein the polyorganosiloxane particles (a-1) have a volume average particle size of 0.008 to 0.6 µm.

3. The polyorganosiloxane-containing graft copolymer composition according to Claim 1 or 2, wherein a polymer prepared by polymerizing the vinyl monomer (a-2) alone has a solubility parameter of 9.15 to 10.15 (cal/cm³)^{1/2}.

4. The polyorganosiloxane-containing graft copolymer composition according to any one of Claims 1 to 3, wherein the polyorganosiloxane particles (a-1) are in the form of latex.

5. The polyorganosiloxane-containing graft copolymer composition according to any one of Claims 1 to 4, wherein the vinyl monomer (a-2) is at least one selected from the group consisting of an aromatic vinyl monomer, an vinyl cyanide monomer, a (meth)acrylate monomer, and a carboxyl-group-containing vinyl monomer.

6. The polyorganosiloxane-containing graft copolymer composition according to any one of Claims 1 to 5, wherein the antioxidant (B) is a phosphorus-based antioxidant or a mixture of at least two antioxidant components.

7. The polyorganosiloxane-containing graft copolymer composition according to any one of Claims 1 to 5, wherein the antioxidant (B) is a mixture of at least two antioxidant components.

8. The polyorganosiloxane-containing graft copolymer composition according to Claim 7, wherein the antioxidant (B) contains at least one compound having a structure represented by the following chemical formula (1) in molecule:

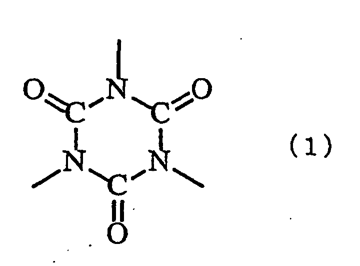

9. The polyorganosiloxane-containing graft copolymer composition according to Claim 8, wherein the antioxidant (B) further contains a phenolic antioxidant.

10. The polyorganosiloxane-containing graft copolymer composition according to Claim 8, wherein the antioxidant (B) further contains a sulfur-containing antioxidant.

11. The polyorganosiloxane-containing graft copolymer composition according to Claim 1, wherein the antioxidant (B) is such an antioxidant that, when 0.5 parts by weight of the antioxidant is kneade with 100 parts by weight of a polymer, which is prepared by polymerizing only the vinyl monomer (a-2) (excluding a multifunctional monomer) of the polyorganosiloxane-containing graft copolymer (A), at 230°C for 3 minutes to prepare a resin composition, this resin composition exhibits a decomposition temperature at least 5°C higher than the decomposition temperature of the polymer alone, the decomposition temperatures being determined at a heating rate of 10°C/min by differential thermal analysis.

12. A flame retardant comprising the polyorganosiloxane-containing graft copolymer composition according to any one of Claims 1 to 11.

13. A flame-retardant resin composition prepared by compounding 100 parts by weight of thermoplastic resin and 0.1 to 30 parts by weight of the flame retardant according to Claim 12.
